# FASCICULE DE BREVET EUROPEEN

(11) **EP 3 842 159 B1**
(45) Date de publication et mention de la délivrance du brevet: **05.01.2022**
(21) Numéro de dépôt: 20213075.3
(22) Date de dépôt: 10.12.2020
(51) Int. Cl.: B07C 3/02, B65G 47/52

(54) **INSTALLATION DE TRI DE COLIS AVEC UN CONVOYEUR À GODETS À BOUCLE FERMÉE**
ANLAGE ZUM SORTIEREN VON PAKETEN MIT EINEM BEHÄLTERERFÖRDERER MIT GESCHLOSSENEM UMLAUF
INSTALLATION FOR SORTING PARCELS WITH A BUCKET CONVEYOR WITH CLOSED LOOP

(30) Priorité: 24.12.2019 FR 1915525
(43) Date de publication de la demande: 30.06.2021
(73) Titulaire: Solystic, 92220 Bagneux (FR)
(72) Inventeur: MOULLARD, Eric, 07500 Guilherand Granges (FR); EYRAUD, Fabrice, 26800 Porte les Valence (FR); PELLEGRIN, Laurent, 26250 Livron (FR); RIEU, Jean, 07800 Saint Georges les Bains (FR); VOLTA, Bruno, 91190 Gif sur Yvette (FR)
(74) Mandataire: Prugneau, Philippe

(56) Documents cités:
- EP-A1- 0 761 322
- EP-A2- 0 339 337
- WO-A1-2005/025764
- US-B1- 8 919 529

## Description

### Domaine technique

L'invention concerne une installation de tri de colis comprenant un convoyeur à godets à boucle fermée conçu pour convoyer des colis selon une certaine direction de convoyage au-dessus d'une pluralité de sorties de tri, l'installation de tri comprenant un réceptacle de tri disposé à chaque sortie de tri dans une position de chargement dans laquelle les colis sont chargés par gravité depuis les godets dans le réceptacle.

### Technique antérieure

Le volume croissant des Petits Paquets Import, dits PPI, amplifie le besoin d'équiper les installations de tri de colis avec des convoyeurs à godets à boucle fermée capables de trier les colis à vitesse élevée.

Ce type de convoyeur, décrit dans le document US8919529, comprend généralement des sorties de tri réparties à pas constant sous les godets, chacune étant équipée d'un réceptacle de tri apte à recevoir des colis depuis les godets.

Les réceptacles de tri pleins sont ensuite extraits des sorties de tri par des Opérateurs faisant face aux sorties de tri qui les remplacent par des réceptacles de tri vides.

Les réceptacles de tri pleins sont ensuite amenés par les Opérateurs dans une zone de stockage pour être transportés finalement en zone d'expédition.

Avec l'augmentation du nombre de colis à trier, la surface au sol occupée par la zone de stockage et le convoyeur à godets est de plus en plus importante.

Or, plus la surface au sol est importante et plus le coût de l'installation de tri augmente.

### Résumé de l'invention

Le but de l'invention est donc de proposer une installation de tri plus compacte.

A cet effet, l'invention a pour objet une installation de tri de colis comprenant un convoyeur à godets à boucle fermée conçu pour convoyer des colis selon une certaine direction de convoyage au-dessus d'une pluralité de sorties de tri, l'installation de tri comprenant un réceptacle de tri disposé à chaque sortie de tri dans une position de chargement dans laquelle les colis sont chargés par gravité depuis les godets dans le réceptacle, caractérisée en ce que chaque sortie de tri comprend un système de transfert de réceptacles de tri conçu pour déplacer à pas constant une file de réceptacles de tri selon une direction de transfert transversale au convoyeur à godets de l'extérieur de la boucle formée par le convoyeur vers l'intérieur de la boucle formée par le convoyeur à godets, et en ce que le système de transfert est conçu pour placer un réceptacle de tri dans la position de chargement en sortie de tri à chaque pas de déplacement de la file de réceptacles de tri dans la direction de transfert.

L'idée à la base de l'invention consiste à utiliser l'espace à l'intérieur de la boucle du convoyeur à godets comme zone de stockage pour stocker temporairement les réceptacles chargés en colis avant leur expédition.

Avec l'installation de tri selon l'invention, les files de réceptacles s'étendent transversalement au convoyeur pour former des allées de stockage parallèles les unes aux autres à l'intérieur de la zone de stockage.

Ainsi, l'espace habituellement perdu à l'intérieur de la boucle du convoyeur à godets est utilisé et optimisé et l'espace généralement utilisé par les zones de stockage à l'extérieur de la boucle du convoyeur à godets est libéré.

De plus, le déplacement en file des réceptacles transversalement au convoyeur permet de réduire le pas des sorties de tri au minimum, à savoir la longueur d'un réceptacle de tri dans la direction de convoyage, réduisant d'autant l'emprise au sol du convoyeur.

L'utilisation d'un pas constant de déplacement de la file de réceptacles permet également de garantir le placement d'un réceptacle de tri en position de chargement à chaque pas de déplacement de la file dans la direction de transfert.

Le remplacement d'un réceptacle de tri plein en position de chargement par un réceptacle de tri vide par simple déplacement des réceptacles transversalement au convoyeur permet également de réduire le temps de remplacement par rapport à un remplacement de réceptacles effectué d'un même côté du convoyeur.

L'installation de tri selon l'invention pourra également présenter les particularités suivantes :
- le système de transfert est conçu pour déplacer la file de réceptacles de tri dans la direction de transfert de l'intérieur de la boucle formée par le convoyeur vers l'extérieur de la boucle formée par le convoyeur ;
- au moins un réceptacle de tri de la file s'étend dans la direction de transfert selon une longueur correspondant sensiblement à un pas de déplacement de la file de réceptacles de tri dans la direction de transfert ;
- au moins un réceptacle de tri de la file s'étend dans la direction de transfert selon une longueur correspondant sensiblement à deux pas de déplacement de la file de réceptacles de tri dans la direction de transfert ;
- le système de transfert comprend au moins un rail de guidage pour guider les réceptacles de tri dans la direction de transfert, ledit au moins un rail s'étendant dans la direction de transfert transversalement de part en part du convoyeur à godets ;
- un dispositif d'alimentation en réceptacles de tri est prévu pour alimenter les sorties de tri en réceptacles de tri par l'extrémité amont dudit rail de guidage dans la direction de transfert et un dispositif d'évacuation de réceptacles est prévu pour extraire les réceptacles de tri par l'extrémité aval dudit rail de guidage dans la direction de transfert ;
- le système de transfert comprend une chaine sans fin s'étendant dans la direction de transfert le long dudit rail de guidage avec des loquets répartis sur la chaine au pas de déplacement de la file de réceptacles de tri, chaque loquet étant conçu pour coopérer avec un réceptacle de tri de la file pour l'entrainer en déplacement dans la direction de transfert au pas déplacement de la file de réceptacles de tri.

### Description sommaire des dessins

La présente invention sera mieux comprise et d'autres avantages apparaîtront à la lecture de la description détaillée de l'invention prise à titre d'exemple nullement limitative et illustrée par les dessins annexés, dans lesquels :
[Fig 1] La figure 1 représente schématiquement une installation de tri selon l'invention ;
[Fig.2] La figure 2 représente schématiquement une partie d'un convoyeur à godets avec plusieurs systèmes de transfert selon l'invention ;
[Fig.3] La figure 3 représente schématiquement le système de transfert selon l'invention ;
[Fig.4] La figure 4 représente schématiquement une partie de la chaine à loquets d'un système de transfert selon l'invention ;
[Fig.5] La figure 5 représente schématiquement un loquet de la chaine d'un système de transfert selon l'invention.

### Description détaillée de l'invention

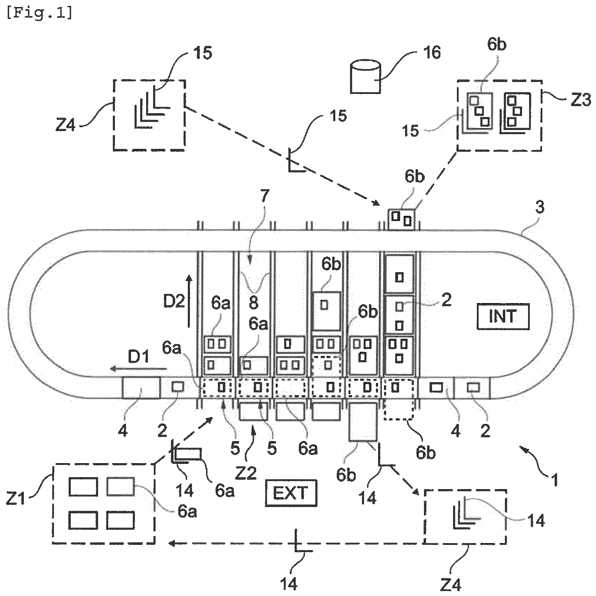

L'installation de tri 1 de colis 2 selon l'invention telle que représentée sur la figure 1 est particulièrement bien adaptée pour trier des colis 2 ou paquets du type Petits Paquets Import, dits PPI.

Sans restreindre la portée de l'invention, l'installation de tri 1 selon l'invention convient également pour le tri de gros colis ou des courriers postaux (lettres, magasines, catalogues, etc.).

L'installation de tri 1 comprend notamment un convoyeur 3 à godets 4 à boucle fermée conçu pour convoyer les colis 2 selon une certaine direction de convoyage D1 au-dessus d'une pluralité de sorties de tri 5 réparties en série et à pas constant.

Chaque godet 4 est ici conçu pour convoyer un colis 2 et pour le décharger dans une sortie de tri 5 appropriée.

Par godet 4, on entend tout type de support avec une paroi de fond et au moins une paroi latérale.

Chaque sortie de tri 5 est équipée d'un réceptacle de tri 6a,6b positionné dans une position de chargement dans laquelle le réceptacle de tri 6a,6b est apte à recevoir un colis 2 chargé par gravité depuis un godet 4.

L'installation de tri 1 comprend également un système de transfert 7 de réceptacles de tri 6a,6b conçu pour remplacer en position de chargement, un réceptacle de tri 6a,6b plein par un réceptacle de tri 6a,6b vide.

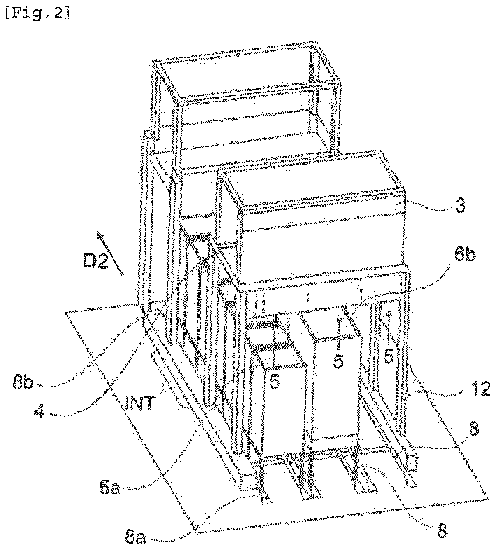

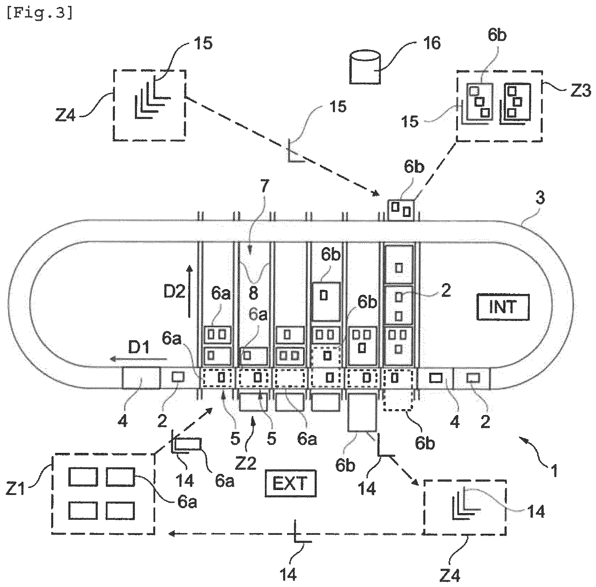

Pour cela, le système de transfert 7, représenté sur les figures 2 et 3, déplace à pas constant une file de réceptacles de tri 6a,6b transversalement au convoyeur 3 à godets 4 et positionne un réceptacle de tri 6a,6b dans la position de chargement en sortie de tri 5, ici les réceptacles de tri représentés en pointillé sur la figure 1, à chaque pas de déplacement de la file.

Le système de transfert 7 déplace également la file de réceptacles de tri 6a,6b de l'extérieur EXT de la boucle formée par le convoyeur 3 vers l'intérieur INT de la boucle formée par le convoyeur 3.

Le déplacement de la file de réceptacles de tri 6a,6b transversalement au convoyeur de l'extérieur EXT vers l'intérieur INT de la boucle du convoyeur suit ici une direction dite de transfert D2.

On comprend ainsi que les réceptacles de tri 6a,6b vides sont placés en position de chargement depuis l'extérieur EXT de la boucle du convoyeur 3 et sont évacués de la position de chargement vers l'intérieur INT de la boucle du convoyeur 3.

Le système de transfert 7 permet également de prolonger le déplacement de la file de réceptacles de tri 6a,6b, ici chargés en colis 2, dans la direction de transfert D2 de l'intérieur INT de la boucle formée par le convoyeur 3 vers l'extérieur EXT de la boucle formée par le convoyeur 3.

La file de réceptacles de tri 6a,6b peut donc traverser le convoyeur 3 en boucle de part en part en passant sous les godets 4.

L'installation de tri 1 comprend également deux types de réceptacles de tri, les réceptacles de tri dits « simples » 6a et les réceptacles de tri dits « doubles » 6b.

Les réceptacles de tri simples 6a sont deux fois moins longs que les réceptacles de tri doubles 6b.

Plus particulièrement et comme représenté sur la figure 1, les réceptacles de tri simples 6a sont conçus de sorte qu'ils s'étendent dans la direction de transfert D2 selon une longueur correspondant sensiblement à un pas de déplacement de la file de réceptacles de tri 6a,6b dans la direction de transfert D2.

Les réceptacles de tri doubles 6b sont quant à eux conçus de sorte qu'ils s'étendent dans la direction de transfert D2 selon une longueur correspondant sensiblement à deux pas de déplacement de la file de réceptacles de tri 6a,6b dans la direction de transfert D2.

Les réceptacles de tri doubles 6b permettent de trier un plus grand nombre de colis 2 que les réceptacles de tri simple 6a..

En effet, le déplacement des files de réceptacles de tri 6a,6b d'un pas provoque le remplacement des réceptacles de tri simples 6a en position de chargement par d'autres réceptacles de tri simples ou doubles 6a,6b alors que les réceptacles de tri doubles 6b restent en position de chargement sur deux pas, permettant ainsi une meilleure répartition des colis dans les réceptacles de tri doubles 6b.

Dans l'installation de tri 1 selon l'invention, l'espace entre les réceptacles de tri 6a,6b d'une même file est négligeable ce qui fait que le pas de déplacement de la file correspond sensiblement à la longueur d'un réceptacle de tri simple 6a dans la direction de transfert D2.

Aussi, pour faciliter le déplacement des réceptacles de tri 6a,6b en file, le système de transfert 7 comprend au moins un rail de guidage 8, ici par exemple deux rails de guidage parallèles deux à deux, s'étendant dans la direction de transfert D2 transversalement de part en part du convoyeur 3 à godets 4.

Le système de transfert comprend également un moyen d'entrainement 9 pour entrainer à pas constant les réceptacles de tri 6a,6b de la file dans la direction de transfert D2.

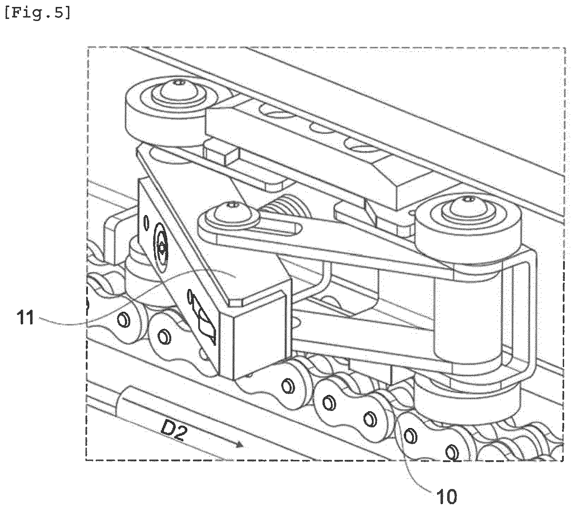

Comme représenté sur les figures 3, 4 et 5, le moyen d'entrainement 9 comprend deux chaines 10 sans fin équipées de loquets 11 répartis au pas de déplacement de la file de réceptacles de tri 6a, 6b le long des rails de guidage 8.

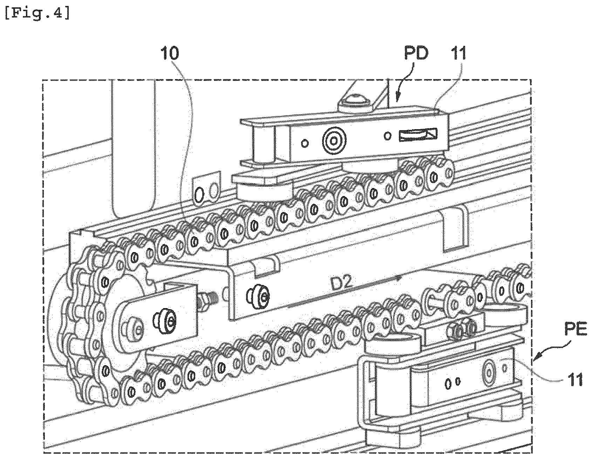

Chaque loquet 11 est monté mobile sur la chaine entre une position déployée PD, visible sur la figure 4, dans laquelle il est apte à coopérer avec un réceptacle de tri 6a,6b de la file pour l'entrainer en déplacement dans la direction de transfert D2 au pas de déplacement de la file de réceptacles de tri et une position escamotée PE, également visible sur la figure 4, dans laquelle le loquet 11 s'efface pour ne pas entrainer les réceptacles de tri 6a,6b en déplacement.

Comme représente sur la figure 4, les loquets 11 sont en position déployée sur le brin de la chaine 10 qui se déplace dans la direction de transfert D2 et sont en position escamotée sur le brin de la chaine 10 qui se déplace dans la direction opposée pour ne pas gêner le déplacement des réceptacles de tri 6a,6b dans la direction de transfert D2.

Toutefois, pour permettre la mise en prise d'un réceptacle de tri 6a, 6b par un loquet 11 lors de son insertion dans la position de chargement, les loquets 11 sont temporairement poussés en position escamotée par le réceptacle de tri 6a,6b.

Les chaînes 10 à loquets 11 sont quant à elles entrainées à une vitesse d'environ 0.1m/s par un motoréducteur 12 monté entre les rails de guidage 8.

Cette faible vitesse d'entrainement rend l'inertie de déplacement des réceptacles de tri 6a,6b négligeable dans la direction de transfert D2.

Le système de transfert comprend également des moyens de blocage conçus pour bloquer le réceptacle de tri en position de chargement entre chaque déplacement de la file dans la direction de transfert D2.

De manière avantageuse, les réceptacles de tri 6a,6b sont montés sur des chariots 13 roulants conçus pour rouler dans les rails de guidage 8 et pour enjamber le motoréducteur 12 lors de leur déplacement dans la direction de transfert D2.

Les rails de guidage 8 sont ici légèrement surélevés pour permettre le passage de câbles électriques nécessaire au fonctionnement de l'installation de tri 1.

Ainsi, chaque rail comprend une rampe d'accès 8a en amont par rapport à la direction de transfert et une rampe de sortie 8b en aval conçues respectivement pour faciliter l'accès au chariot 13 et son évacuation.

L'installation de tri 1 selon l'invention comprend également un dispositif d'alimentation 14 en réceptacles de tri 6a,6b prévu pour alimenter les sorties de tri 5 en réceptacles de tri 6a,6b par l'extrémité amont des rails de guidage 8 dans la direction de transfert D2.

Le dispositif d'alimentation 14 se présente ici sous la forme d'un robot navette autonome en déplacement qui est conçu pour récupérer un réceptacle de tri 6a,6b vide dans une zone de stockage Z1 pour réceptacles vide et pour l'emmener en sortie de tri 5 pour sa prise en charge par le système de transfert 7 et sa mise en place directement en position de chargement.

La sortie de tri 5 peut également comprendre une zone de stockage tampon Z2 conçue pour stocker au moins un réceptacle de tri 6a,6b avant son insertion en position de chargement.

Dans ce cas, le dispositif d'alimentation 14 dépose le réceptacle de tri 6a,6b vide en zone de stockage tampon Z2.

De la même manière, l'installation de tri comprend un dispositif d'évacuation 15 de réceptacles de tri conçu pour extraire les réceptacles de tri 6a, 6b par l'extrémité aval des rails de guidage 8 dans la direction de transfert D2 dès qu'un réceptacle de tri 6a,6b se trouve sous la boucle opposée du convoyeur 3.

Le dispositif d'évacuation 15 se présente également sous la forme d'un robot navette autonome en déplacement conçu pour venir récupérer un réceptacle de tri 6a,6b chargé en colis 2 et l'amener directement dans une zone d'expédition Z3.

Un cycle de transfert de réceptacles de tri 6a,6b selon l'invention se déroulera par exemple de la manière suivante.

En réponse à la détection d'un réceptacle de tri 6a,6b plein en position de chargement, une unité de contrôle/commande 16 de l'installation de tri ordonne à un robot navette 14 stationné dans une zone de stockage Z4 pour robot de venir récupérer un réceptacle de tri simple 6a vide dans la zone de stockage Z1.

L'unité de contrôle/commande 16 ordonne ensuite au robot d'emmener le réceptacle de tri simple 6a vide au niveau d'une sortie de tri 5 à l'extrémité amont des rails de guidage 8 dans laquelle un réceptacle de tri 6a,6b plein se trouve en position de chargement.

Le système de transfert 7 de la sortie de tri 5 correspondante prend alors en charge le réceptacle de tri simple 6a et le déplace dans la direction de transfert D2 sur les rails de guidage 8 via les moyens d'entrainement 9 pour l'insérer en position de chargement.

Le robot navette 14 repart alors se mettre en stationnement dans la zone Z4.

Ensuite, en réponse à un signal d'insertion du réceptacle de tri simple 6a en position de chargement, l'unité de contrôle/commande commande l'évacuation d'un réceptacle de tri simple 6a plein vers l'intérieur de la boucle du convoyeur 3 ainsi que le déplacement dans la direction de transfert D2 de l'ensemble des autres réceptacles de tri 6a,6b de la file.

Les colis 2 sont ensuite chargés dans le réceptacle de tri simple 6a en position de chargement depuis les godets 4.

Une fois le réceptacle de tri simple 6a plein, un nouveau réceptacle de tri simple 6a vide est positionné en position de chargement et ainsi de suite.

Ainsi, pour chaque sortie de tri, les réceptacles de tri 6a,6b chargés en colis 2 sont déplacés en file à l'intérieur de la boucle en formant des allées de réceptacles.

Enfin, en réponse à la détection d'un réceptacle de tri 6a, 6b sous les godets 4 du convoyeur à l'opposé des sorties de tri 5, l'unité de contrôle/commande 16 commande le déplacement d'un robot navette 15 pour venir récupérer le réceptacle de tri 6a,6b à l'extrémité aval des rails de guidage 8 et pour l'emmener en zone d'expédition Z3.

## Revendications

1. Installation de tri (1) de colis (2) comprenant un convoyeur (3) à godets (4) à boucle fermée conçu pour convoyer des colis selon une certaine direction de convoyage (D1) au-dessus d'une pluralité de sorties de tri(5), l'installation de tri comprenant un réceptacle de tri (6a,6b) disposé à chaque sortie de tri dans une position de chargement dans laquelle les colis sont chargés par gravité depuis les godets dans le réceptacle, **caractérisée en ce que** chaque sortie de tri comprend un système de transfert (7) de réceptacles de tri conçu pour déplacer à pas constant une file de réceptacles de tri selon une direction de transfert (D2) transversale au convoyeur à godets de l'extérieur (EXT) de la boucle formée par le convoyeur vers l'intérieur (INT) de la boucle formée par le convoyeur à godets, et **en ce que** le système de transfert est conçu pour placer un réceptacle de tri dans la position de chargement en sortie de tri à chaque pas de déplacement de la file de réceptacles de tri dans la direction de transfert.

2. Installation de tri selon la revendication 1, **caractérisée en ce que** le système de transfert est conçu pour déplacer la file de réceptacles de tri dans la direction de transfert de l'intérieur de la boucle formée par le convoyeur vers l'extérieur de la boucle formée par le convoyeur.

3. Installation de tri selon les revendications 1 ou 2, **caractérisée en ce qu'**au moins un réceptacle de tri de la file, dit réceptacle de tri simple (6a), s'étend dans la direction de transfert selon une longueur correspondant sensiblement à un pas de déplacement de la file de réceptacles de tri dans la direction de transfert.

4. Installation de tri selon l'une quelconques des revendications 1 à 3, **caractérisée en ce qu'**au moins un réceptacle de tri de la file, dit réceptacle de tri double (6b) s'étend dans la direction de transfert selon une longueur correspondant sensiblement à deux pas de déplacement de la file de réceptacles de tri dans la direction de transfert.

5. Installation de tri selon l'une quelconques des revendications 1 à 4, **caractérisée en ce que** le système de transfert comprend au moins un rail de guidage (8) pour guider les réceptacles de tri dans la direction de transfert, ledit au moins un rail s'étendant dans la direction de transfert transversalement de part en part du convoyeur à godets.

6. Installation de tri selon la revendication 5, **caractérisée en ce qu'**elle comprend un dispositif d'alimentation (14) en réceptacles de tri conçu pour alimenter les sorties de tri en réceptacles de tri par l'extrémité amont dudit rail de guidage dans la direction de transfert et un dispositif d'évacuation (15) de réceptacles conçu pour extraire les réceptacles de tri par l'extrémité aval dudit rail de guidage dans la direction de transfert.

7. Installation de tri selon l'une quelconques des revendications 1 à 6, **caractérisée en ce que** le système de transfert comprend une chaine (10) sans fin s'étendant dans la direction de transfert le long dudit rail de guidage avec des loquets (11) répartis sur la chaine au pas de déplacement de la file de réceptacles de tri, chaque loquet étant conçu pour coopérer avec un réceptacle de tri de la file pour l'entrainer en déplacement dans la direction de transfert au pas déplacement de la file de réceptacles de tri.

## Patentansprüche

1. Anlage zum Sortieren (1) von Paketen (2), umfassend einen Förderer (3) mit Bechern (4) mit geschlossenem Umlauf, der eingerichtet ist, die Pakete in gewisse Förderrichtungen (D1) über einer Vielzahl von Sortierausgängen (5) zu befördern, wobei die Sortieranlage einen Sortierbehälter (6a, 6b) umfasst, der an jedem Sortierausgang in einer Ladeposition angeordnet ist, in der die Pakete durch Schwerkraft von den Bechern in den Behälter geladen werden, **dadurch gekennzeichnet, dass** jeder Sortierausgang ein Transfersystem (7) von Sortierbehältern umfasst, das eingerichtet ist, um mit konstantem Abstand eine Reihe von Sortierbehältern in eine Transferrichtung (D2) quer zum Becherförderer von außerhalb (EXT) des von dem Förderer gebildeten Umlaufs zum Inneren (INT) des von dem Becherförderer gebildeten Umlaufs zu verlagern, und dass das Transfersystem eingerichtet ist, um einen Sortierbehälter in der Ladeposition am Sortierausgang bei jedem Verlagerungsschritt der Reihe von Sortierbehältern in Transferrichtung anzuordnen.

2. Sortieranlage nach Anspruch 1, **dadurch gekennzeichnet, dass** das Transfersystem eingerichtet ist, um die Reihe von Sortierbehältern in Transferrichtung vom Inneren des vom Förderer gebildeten Umlaufs außerhalb des vom Förderer gebildeten Umlaufs zu verlagern.

3. Sortieranlage nach den Ansprüchen 1 oder 2, **dadurch gekennzeichnet, dass** sich mindestens ein Sortierbehälter der Reihe, Einfachsortierbehälter (6a) genannt, in Transferrichtung entlang einer Länge entsprechend im Wesentlichen einem Verlagerungsschritt der Reihe von Sortierbehältern in Transferrichtung erstreckt.

4. Sortieranlage nach einem der Ansprüche 1 bis 3, **dadurch gekennzeichnet, dass** sich mindestens ein Sortierbehälter der Reihe, Zweifachsortierbehälter (6b) genannt, in Transferrichtung entlang einer Länge entsprechend im Wesentlichen zwei Verlagerungsschritten der Reihe von Sortierbehältern in Transferrichtung erstreckt.

5. Sortieranlage nach einem der Ansprüche 1 bis 4, **dadurch gekennzeichnet, dass** das Transfersystem mindestens eine Führungsschiene (8) umfasst, um die Sortierbehälter in Transferrichtung zu führen, wobei sich die mindestens eine Schiene in Transferrichtung quer beiderseits des Becherförderers erstreckt.

6. Sortieranlage nach Anspruch 5, **dadurch gekennzeichnet, dass** sie eine Zuführvorrichtung (14) von Sortierbehältern, die eingerichtet ist, um die Sortierausgänge mit Sortierbehältern über das stromaufwärtige Ende der Führungsschiene in Transferrichtung zu versorgen, und eine Abtransportvorrichtung (15) für Behälter umfasst, die eingerichtet ist, um die Sortierbehälter über das stromabwärtige Ende der Führungsschiene in Transferrichtung abzutransportieren.

7. Sortieranlage nach einem der Ansprüche 1 bis 6, **dadurch gekennzeichnet, dass** das Transfersystem eine Endloskette (10) umfasst, die sich in Transferrichtung entlang der Führungsschiene mit Arretierungen (11), die auf der Kette im Schritt der Verlagerung der Reihe von Sortierbehältern verteilt sind, erstreckt, wobei jede Arretierung eingerichtet ist, um mit einem Sortierbehälter der Reihe zusammenzuwirken, um ihn in Transferrichtung im Schritt der Verlagerung der Reihe von Sortierbehältern zu verlagern.

## Claims

1. A sorting installation (1) for sorting parcels (2), the sorting installation comprising a closed-loop bin conveyor (3) having bins (4) and designed to convey parcels in a conveying direction (D1) over a plurality of sorting outlets (5), the sorting installation further comprising a sorting receptacle (6a, 6b) disposed at each sorting outlet in a loading position in which the parcels are loaded by gravity from the bins into the receptacle, said sorting installation being **characterized in that** each sorting outlet is provided with a sorting receptacle transfer system (7) designed to move a line of sorting receptacles in constant-size steps in a transfer direction (D2) extending transversely to the bin conveyor from the outside (EXT) of the loop formed by the conveyor towards the inside (INT) of the loop formed by the bin conveyor, and **in that** the transfer system is designed to place a sorting receptacle in the loading position at a sorting outlet each time the line of sorting receptacles is moved by one step in the transfer direction.

2. A sorting installation according to claim 1, **characterized in that** the transfer system is designed to move the line of sorting receptacles in the transfer direction from the inside of the loop formed by the conveyor towards the outside of the loop formed by the conveyor.

3. A sorting installation according to claim 1 or claim 2, **characterized in that** at least one sorting receptacle of the line, which receptacle is referred to as a "single sorting receptacle" (6a), extends in the transfer direction over a length that corresponds substantially to one step by which the line of sorting receptacles are moved in the transfer direction.

4. A sorting installation according to any one of claims 1 to 3, **characterized in that** at least one sorting receptacle of the line, which receptacle is referred to as a "double sorting receptacle" (6b), extends in the transfer direction over a length that corresponds substantially to two steps by which the line of sorting receptacles are moved in the transfer direction.

5. A sorting installation according to any one of claims 1 to 4, **characterized in that** the transfer system comprises at least one guide rail (8) for guiding the sorting receptacles in the transfer direction, said at least one rail extending in the transfer direction transversely from one side of the bin conveyor to the other.

6. A sorting installation according to claim 5, **characterized in that** it further comprises a feed device (14) designed to feed the sorting outlets with sorting receptacles via the upstream end of said guide rail in the transfer direction, and a removal device (15) for removing receptacles that is designed to extract the sorting receptacles via the downstream end of said guide rail in the transfer direction.

7. A sorting installation according to any one of claims 1 to 6, **characterized in that** the transfer system further comprises an endless chain (10) extending in the transfer direction along said guide rail with latches (11) distributed over the chain at a pitch corresponding to the size of the steps by which the line of sorting receptacles are moved, each latch being designed to co-operate with a sorting receptacle of the line to drive said sorting receptacle, thereby moving it, in the transfer direction over a distance corresponding to the size of the steps by which the line of sorting receptacles are moved.
